# EUROPEAN PATENT SPECIFICATION

(11) **EP 3 457 643 B1**
(45) Date of publication and mention of the grant of the patent: **09.09.2020**
(21) Application number: 17809537.8
(22) Date of filing: 22.02.2017
(51) Int. Cl.: H04L 12/825, H04L 12/835, H04L 12/851

(54) **METHOD AND DEVICE FOR TRANSMITTING DATA STREAM**
VERFAHREN UND VORRICHTUNG ZUR ÜBERTRAGUNG VON DATENSTRÖMEN
PROCÉDÉ ET DISPOSITIF DE TRANSMISSION DE FLUX DE DONNÉES

(30) Priority: 07.06.2016 CN 201610404532
(43) Date of publication of application: 20.03.2019
(73) Proprietor: Huawei Technologies Co., Ltd., Longgang District Shenzhen, Guangdong 518129 (CN)
(72) Inventor: CHEN, Li, New Territories Hong Kong (CN); CHEN, Kai, Hkust Hong Kong (CN); YI, Bairen, Hkust Hong Kong (CN); ZHENG, Kai, Shenzhen Guangdong 518129 (CN); CHAKRAVARTULA, Sayee Kompalli, Shenzhen Guangdong 518129 (CN); ZUO, Jing, Shenzhen Guangdong 518129 (CN)
(74) Representative: Maiwald Patent- und Rechtsanwaltsgesellschaft mbH
(86) International application number: PCT/CN2017/074329
(87) International publication number: WO 2017/211096

(56) References cited:
- CN-A- 101 582 842
- CN-A- 102 404 077
- CN-A- 103 229 443
- CN-A- 104 184 670
- US-A1- 2015 334 712
- HULYA SEFEROGLU ET AL: "Network coding-aware queue management for TCP flows over coded wireless networks", IEEE / ACM TRANSACTIONS ON NETWORKING, IEEE / ACM, NEW YORK, NY, US, vol. 22, no. 4, 1 August 2014 (2014-08-01) , pages 1297-1310, XP058066183, ISSN: 1063-6692, DOI: 10.1109/TNET.2013.2278292
- YONG CUI ET AL: "FMTCP", IEEE / ACM TRANSACTIONS ON NETWORKING, IEEE / ACM, NEW YORK, NY, US, vol. 23, no. 2, 1 April 2015 (2015-04-01), pages 465-478, XP058071800, ISSN: 1063-6692, DOI: 10.1109/TNET.2014.2300140
- HULYA SEFEROGLU ET AL: "NCAPQ: Network Coding-Aware Priority Queueing for UDP Flows over COPE", NETWORK CODING (NETCOD), 2011 INTERNATIONAL SYMPOSIUM ON, IEEE, 25 July 2011 (2011-07-25), pages 1-8, XP031928340, DOI: 10.1109/ISNETCOD.2011.5979091 ISBN: 978-1-61284-138-0

## Description

### TECHNICAL FIELD

Embodiments of the present disclosure relate to the communications field, and more specifically, to a method for transmitting data streams, and a device.

### BACKGROUND

A multipath transmission system is a communications system having multiple paths. For example, a data center network (DCN) is a typical multipath transmission system. The data center network connects a large quantity of servers, to organize a network having multiple transmission paths. The data center network is a new network that integrates computation, storage, and networking together. Data streams of different types of services are transmitted in the multipath transmission system. Some services, such as commercial application services or financial transaction services (commonly, such as a high frequency transaction), have an urgent requirement on low-delay reliable transmission. Therefore, low-delay reliable transmission of a data stream is crucial in the multipath transmission system.

Network congestion is an important factor that affects the low-delay reliable transmission. The network congestion causes a packet loss, and consequently, transmission reliability is affected. In addition, the network congestion increases a transmission delay.

In the prior art, low-delay reliable transmission of a data stream is usually ensured based on a retransmission mechanism and a congestion avoidance technology. The retransmission mechanism means: after a packet loss occurs, requesting a transmit end of a data stream to retransmit a lost packet, to ensure transmission reliability. Specifically, a packet loss situation on multiple paths is detected, and then the situation is fed back to the transmit end of the data stream to trigger the transmit end to perform retransmission. A main idea of the congestion avoidance technology is selecting a path with a lowest congestion degree from multiple paths to transmit a data stream, so as to reduce a transmission delay. Specifically, a network congestion situation on multiple paths is detected, and then the situation is fed back to a transmit end of the data stream to trigger the transmit end to perform corresponding scheduling.

HULYA SEFEROGLU et. al: "Network coding-aware que management for TCP flows over coded wireless networks", IEEE/ACM TRANSACTION ON NETWORKING, IEEE/ACM, New York, NY, US, vol. 22, no. 4, pages 1297-1310, describes a network-coding aware queue management scheme (NCAQM) that is implemented at intermediate network coding nodes and bridges the gap between network coding and TCP rate control. The design of NCAQM is grounded on the network utility maximization (NUM) framework and includes the following mechanisms. NCAQM: 1) stores coded packets at intermediate nodes in order to use the buffer space more efficiently; 2) determines what fraction of the flows should be coded together; and 3) drops packets at intermediate nodes so that it matches the rates of parts of different TCP flows that are coded together. It is demonstrated, via simulation, that NCAQM significantly improves TCP throughput compared to TCP over baseline queue management schemes.

YON CUI et al: "FMTCP", IEEE/ACM TRANSACTIONS ON NETWORKING, IEEE/ACM, New York, NY, US, vol. 23, no. 2, pages 465-478, describes Fountain code-based Multipath TCP, which effectively mitigates the negative impact of the heterogeneity of different paths.

HULYA SEFEROGLU et al: "NCAPQ: Network Coding Aware Priority Queueing for UDP Flows over COPE", NETWORK CODING (NETCOD), 2011, INTERNATIONAL SYMPOSIUM ON, IEEE, pages 1-8, compares two mechanisms; (i) network coding-aware queue management (NCAQM), and (ii) network coding-aware MAC level packet prioritization (NCAPP), and shows that they achieve similar throughput benefits but work in complementary ways.

However, in both an existing retransmission mechanism and an existing congestion avoidance technology, a closed-loop feedback needs to be used to monitor a congestion situation on each path. Consequently, implementation is relatively complex, and feedback control of the closed-loop feedback occupies an extra network bandwidth resource.

### SUMMARY

This present disclosure provides a method for transmitting data streams, and a device, so that on a premise that no closed-loop feedback needs to be used, reliable transmission of a data stream can be ensured, network congestion can be reduced, and implementation complexity can be reduced compared with the prior art.

The object of the present invention is solved by the subject-matter of the independent claims, wherein further embodiments are incorporated in the dependent claims.

According to a first aspect, a method for transmitting data streams is provided. In the method, the data streams are transmitted between a source node and a destination node by using at least one intermediate node; the data streams include a first data stream whose encoded form is a fountain code; and the method includes: receiving, by a first intermediate node, an encoded packet sent by the source node or a second intermediate node, where the encoded packet is a packet obtained by encoding an original packet of the first data stream with a fountain code technology; and when usage of a first cache queue exceeds a threshold, dropping, by the first intermediate node, the encoded packet, where the first cache queue is a cache queue in the first intermediate node and the first cache queue is allocated to the first data stream, and the threshold indicates maximum allowed usage of the first cache queue.

It should be understood that for example, the first data stream is transmitted on one transmission path. Specifically, the first data stream enters the transmission path from a source node on the transmission path, and is transmitted by one or more intermediate nodes on the transmission path, so as to arrive at a destination node on the transmission path. The first intermediate node in the technical solution in this application may represent one intermediate node or more intermediate nodes on the transmission path of the first data stream. It should be further understood that if the source node on the transmission path of the first data stream is considered as a sending device, the intermediate node is considered as a forwarding device, and the destination node is considered as a receiving device, the first intermediate node in the technical solution in this application may also be referred to as a forwarding device. Specifically, for example, the first intermediate node may be a network device having a data forwarding function, such as a switch or a router.

In the technical solution in this application, when usage of a first cache queue allocated to a first data stream exceeds a threshold, a currently-received encoded packet of the first data stream is dropped. The threshold is maximum allowed usage of the first cache queue. Network congestion can be reduced to some extent by performing aggressive packet dropping on the first data stream. An encoded form of the first data stream is a fountain code. Fountain code-based data transmission can ensure data transmission reliability without retransmission. Therefore, performing aggressive packet dropping on the first data stream does not cause a throughput loss of the first data stream, but may still ensure reliable transmission of the first data stream. In the technical solution in this application, no closed-loop feedback is used, thereby avoiding a problem in an existing method that feedback control occupies an extra network bandwidth resource. Therefore, in the technical solution in this application, on a premise that no closed-loop feedback needs to be used, reliable transmission of a data stream can be ensured, network congestion can be reduced, and implementation complexity can be reduced compared with the prior art.

Specifically, the encoded packet carries an identifier used to indicate the first data stream. The first intermediate node may determine, according to the identifier carried in the encoded packet, that the encoded packet belongs to the first data stream, and then determine whether the usage of the first cache queue exceeds the threshold, so as to determine to drop or cache the encoded packet.

In an example, the method for transmitting data streams is applied to a multipath transmission system. The multipath transmission system includes multiple transmission paths. The multiple transmission paths are used for transmitting the data streams. The first intermediate node represents each intermediate node on each of the multiple transmission paths.

In the technical solution in this application, the first data stream is transmitted by using multiple transmission paths, so that transmission efficiency of the first data stream can be effectively improved. Each intermediate node on the multiple transmission paths allocates a first cache queue to the first data stream, and when usage of the first cache queue exceeds the threshold, aggressively drops a currently-received encoded packet of the first data stream. This can effectively reduce network congestion on each of the multiple transmission paths, and therefore can reduce a transmission delay of the first data stream. An encoded form of the first data stream is a fountain code, so that reliable transmission of the first data stream can be ensured. Therefore, in the technical solution in this application, reliable transmission of a data stream can be ensured, and network congestion can be effectively reduced so as to reduce a transmission delay of a data stream, so that low-delay reliable transmission of a data stream in a multipath transmission system can be met. In addition, in the technical solution in this application, no closed-loop feedback needs to be used, thereby reducing implementation complexity compared with the prior art.

With reference to the first aspect, in a first possible implementation of the first aspect, the method further includes: when the usage of the first cache queue does not exceed the threshold, storing, by the first intermediate node, the encoded packet into the first cache queue; and sending, by the first intermediate node, the encoded packet cached in the first cache queue to the destination node.

According to the first aspect, the method further includes: receiving, by the first intermediate node, an instruction message, where the instruction message is sent by the destination node when the destination node obtains, by means of decoding based on received encoded packets, all original packets of the first data stream, the instruction message is used to instruct the source node to stop sending the first data stream, and a size of the instruction message is 1 bit; and sending, by the first intermediate node, the instruction message to the source node.

In the technical solution in this application, when a destination node obtains, by means of decoding, all original packets of a first data stream, a 1-bit instruction message is used to instruct a source node to stop sending the first data stream, thereby preventing the source node from sending unnecessary data to a network. In addition, a feedback to the source node by using the 1-bit instruction message can effectively reduce network bandwidth occupation compared with a feedback using an ACK packet in the prior art.

According to the first aspect, the instruction message is further used to instruct to drop the first data stream, and the method further includes: dropping, by the first intermediate node according to the instruction message, an encoded packet that is of the first data stream and that is cached in the first cache queue.

In the technical solution in this application, when a destination node obtains, by means of decoding, all original packets of a first data stream, an encoded packet that is of the first data stream and that exists in a network is aggressively dropped. This avoids invalid transmission, and helps reduce network congestion.

In an example, the first data stream may represent each service data stream in the multipath transmission system.

Therefore, a requirement on low-delay reliable transmission of all data streams transmitted in a multipath transmission system may be met in the technical solution in this application.

With reference to any one of the first aspect, or the first possible implementation of the first aspect, in a second possible implementation of the first aspect, the data streams further include a second data stream whose encoded form is not a fountain code, and the method further includes: receiving, by the first intermediate node, a packet of the second data stream; storing, by the first intermediate node, the packet of the second data stream into a second cache queue, where the second cache queue is a cache queue allocated to the second data stream by the first intermediate node; and sending, by the first intermediate node, the packet that is of the second data stream and that is cached in the second cache queue to the destination node.

Multiple different types of services may be deployed in a multipath transmission system. The different types of services are corresponding to various data streams transmitted in the multipath transmission system. In services deployed in the multipath transmission system, some services, such as commercial application services or financial transaction services (commonly, such as a high frequency transaction), have a relatively strict requirement on an end-to-end transmission delay, so that data streams corresponding to these services have an urgent requirement on low-delay reliable transmission. For different service requirements, data streams transmitted in the multipath transmission system are classified into a high-priority stream (such as a delay-sensitive stream) and a low-priority stream. The high-priority stream has an urgent requirement on low-delay reliable transmission. Currently, a solution to the foregoing problem includes a stream priority distinguishing technology. A main idea of the stream priority distinguishing technology is that a forwarding device always first processes a high-priority stream in a shared cache queue, to ensure transmission performance of the high-priority stream. However, the stream priority distinguishing technology may starve the low-priority stream.

In the second possible implementation in this application, the high-priority stream (such as a delay-sensitive stream) in the multipath transmission system is used as the first data stream for operation, and the low-priority stream is used as the second data stream for operation. A forwarding device allocates a first cache queue to the first data stream, and allocates a second cache queue to the second data stream. The first cache queue is used for caching only the first data stream, and the second cache queue is used for caching the second data stream. In other words, the forwarding device caches the first data stream and the second data stream separately. In this case, a fountain code operation and an aggressive packet dropping operation are performed on the first data stream so as to implement low-delay reliable transmission of the first data stream, and impact on the second data stream may be avoided to a larger extent, so that a problem caused in an existing stream priority distinguishing technology that a low-priority stream starves may not occur. Therefore, compared with the existing stream priority distinguishing technology, in the technical solution in this application, on a basis of implementing low-delay reliable transmission of a high-priority stream (corresponding to the first data stream), a phenomenon that a low-priority stream (corresponding to the second data stream) starves may be avoided, thereby ensuring fairness between data streams.

In an example, a method is provided for receiving data streams. In the method, the data streams are transmitted between a source node and a destination node by using at least one intermediate node; and the method includes: receiving, by the destination node by using at least one intermediate node, an encoded packet that is of a first data stream and that is sent by the source node, where the encoded packet is a packet obtained by encoding an original packet of the first data stream with a fountain code technology; decoding, by the destination node, the encoded packet, so as to obtain a corresponding original packet; when obtaining, by means of decoding, all original packets of the first data stream, sending, by the destination node, an instruction message to the source node, where the instruction message is used to instruct the source node to stop sending the first data stream, and a size of the instruction message is 1 bit.

In the technical solution in this application, when a destination node obtains, by means of decoding, all original packets of a first data stream, a 1-bit instruction message is used to instruct a source node to stop sending the first data stream, thereby preventing the source node from sending unnecessary data to a network. In addition, a feedback to the source node by using the 1-bit instruction message can effectively reduce network bandwidth occupation compared with a feedback using an ACK packet in the prior art.

In an example, the method further includes: if the destination node receives an encoded packet of the first data stream again within preset duration after sending the instruction message, continuing, by the destination node, to send the instruction message to the source node, until no encoded packet of the first data stream is received within the preset duration after the instruction message is sent.

In the technical solution in this application, it can be ensured that an instruction message successively arrives at a source node, so as to enable the source node to stop sending an encoded packet of a first data stream.

In an example, the method further includes: if the destination node receives an encoded packet of the first data stream again within the preset duration after sending the instruction message, dropping, by the destination node, the currently-received encoded packet.

In an example, the destination node sends, based on the User Datagram Protocol, UDP), the instruction message to the source node.

A second aspect provides a network device. The network device is configured to transmit data streams between a source node and a destination node; the data streams include a first data stream whose encoded form is a fountain code; and the network device is configured to perform the method in any one of the first aspect or the possible implementations of the first aspect. Specifically, the network device may include a module configured to perform the method in any one of the first aspect or the possible implementations of the first aspect. Specifically, the network device is corresponding to the first intermediate node in the method in any one of the first aspect or the possible implementations of the first aspect.

In an example a network device is provided. The network device is configured to transmit data streams between a source node and a destination node; the data streams include a first data stream whose encoded form is a fountain code; and the network device includes a memory and a processor. The memory is configured to store an instruction. The processor is configured to execute the instruction stored in the memory. In addition, the execution of the instruction stored in the memory enables the processor to perform the method in any one of the first aspect or the possible implementations of the first aspect.

In an example, a multipath transmission system is provided. The multipath transmission system includes a sending device, a receiving device, and a network device. There are multiple paths between the sending device and the receiving device. The network device is a forwarding device on the multiple paths. The network device is corresponding to the network device provided in the third aspect or the fourth aspect. The network device is further corresponding to the first intermediate node in the method in any one of the first aspect or the possible implementations of the first aspect, the sending device is corresponding to the source node in the method in any one of the first aspect or the possible implementation.

In the foregoing implementations, the first data stream may be a delay-sensitive stream. Specifically, for example, the first data stream is a mouse flow that is in a data center network (Data Center Network, DCN) and that has a relatively strict requirement on a transmission delay.

In the foregoing implementations, the usage of the first cache queue is represented in any one of the following forms: a space occupation size, a space occupation percentage, or a space occupation ratio. The threshold indicates maximum allowed usage of the first cache queue. Specifically, for example, overall cache space of the forwarding device is 10 M, storage space configured for the first cache queue is 5 M, and storage space configured for the second cache queue is 5 M. It is assumed that a representation form of the usage of the first cache queue is defined as the space occupation size. In this case, the threshold of the first cache queue is set to be 4 M. It is assumed that a representation form of the usage of the first cache queue is defined as the space occupation percentage. In this case, the threshold of the first cache queue is set to be 80%. It is assumed that a representation form of the usage of the first cache queue is defined as the space occupation ratio. In this case, the threshold of the first cache queue is set to be 0.8.

Based on the foregoing technical solutions, when usage of a first cache queue allocated to a first data stream exceeds a threshold, a currently-received encoded packet of the first data stream is dropped. The threshold is maximum allowed usage of the first cache queue. Network congestion can be reduced to some extent by performing aggressive packet dropping on the first data stream. An encoded form of the first data stream is a fountain code. Fountain code-based data transmission can ensure data transmission reliability without retransmission. Therefore, performing aggressive packet dropping on the first data stream does not cause a throughput loss of the first data stream, but may still ensure reliable transmission of the first data stream. In the technical solutions in this application, no closed-loop feedback is used, thereby avoiding a problem in an existing method that feedback control occupies an extra network bandwidth resource. Therefore, in the technical solutions in this application, on a premise that no closed-loop feedback needs to be used, reliable transmission of a data stream can be ensured, network congestion can be reduced, and implementation complexity can be reduced compared with the prior art.

### BRIEF DESCRIPTION OF DRAWINGS

FIG. 1 is a schematic diagram of an application scenario according to an embodiment of the present disclosure;
FIG. 2 is a schematic diagram of a method for transmitting data streams according to an embodiment of the present disclosure;
FIG. 3 is a schematic flowchart of a method for transmitting data streams according to an embodiment of the present disclosure;
FIG. 4 is a schematic block diagram of a network device according to an embodiment of the present disclosure;
FIG. 5 shows another schematic block diagram of a network device according to an embodiment of the present disclosure; and
FIG. 6 is a schematic block diagram of a multipath transmission system according to an embodiment of the present disclosure.

### DESCRIPTION OF EMBODIMENTS

The following describes the embodiments of the present disclosure with reference to the accompanying drawings.

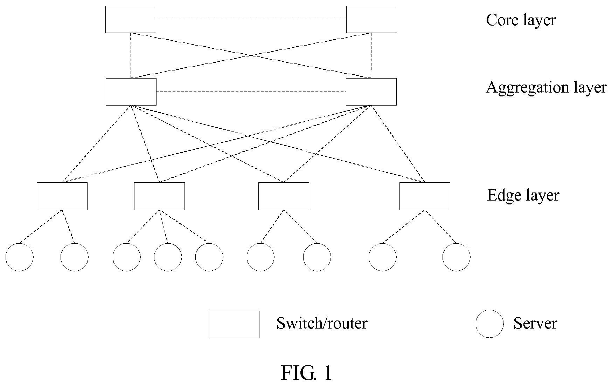

An application scenario in the embodiments of the present disclosure is a multipath transmission system. A data center network is a typical multipath transmission system. Specifically, FIG. 1 shows a specific application scenario according to an embodiment of the present disclosure: a leaf-spine (Leaf-Spine) architecture of a data center network (DCN). As shown in FIG. 1, the leaf-spine architecture includes a server and multi-level switches/routers (such as switches/routers at a core layer, an aggregation layer, and an edge layer that are shown in FIG. 1). In an example of a switch, the leaf-spine architecture includes a core switch, an aggregation switch, an edge switch, and a server. The core switch is connected to the aggregation switch, and different core switches are connected to each other. The aggregation switch is connected to both the core switch and the edge switch. Different aggregation switches are connected to each other. The aggregation switch is referred to as a spine (Spine) switch. The edge switch is connected to both the aggregation switch and the server. The edge switch is referred to as a leaf (Leaf) switch. It should be understood that a server may access a network by connecting to an edge switch, and therefore may establish a communication connection with another server in the network. It may be learned from FIG. 1 that there are multiple transmission paths between any two different servers in the leaf-spine architecture, so that more paths may be provided for selection, and traffic may be distributed to the multiple transmission paths. It should be understood that the server in FIG. 1 may also be referred to as a host.

In a DCN, there is east-west traffic and south-north traffic. The east-west traffic mainly exists in a DCN, and the south-north traffic mainly exists between different DCNs. The east-west traffic plays a dominant role, and takes up approximately 67% of total DCN traffic. The east-west traffic is further classified into a mouse flow and an elephant flow. The mouse flow is generally traffic whose length is dozens of KB. The mouse flow has a relatively strict requirement on an end-to-end transmission delay. In an example of a high frequency transaction, round trip time (Round Trip Time, RTT) of a high frequency transaction message needs to be finished within 30 milliseconds. If timeout occurs, the high frequency transaction message becomes invalid, and consequently, a transaction loss is caused. Therefore, low-delay reliable transmission of a mouse flow is an urgently to-be-resolved technical problem in the DCN.

In the prior art, low-delay reliable transmission of a data stream is usually ensured based on a retransmission mechanism and a congestion avoidance technology. In both an existing retransmission mechanism and an existing congestion avoidance technology, a closed-loop feedback needs to be used to monitor a congestion situation on each path. Consequently, implementation is relatively complex, and feedback control of the closed-loop feedback occupies an extra network bandwidth resource.

To resolve the foregoing technical problems, the embodiments of the present disclosure provide a method for transmitting data streams, and a device, so that on a premise that no closed-loop feedback needs to be used, reliable transmission of a data stream can be ensured, network congestion can be reduced, and implementation complexity can be reduced compared with the prior art.

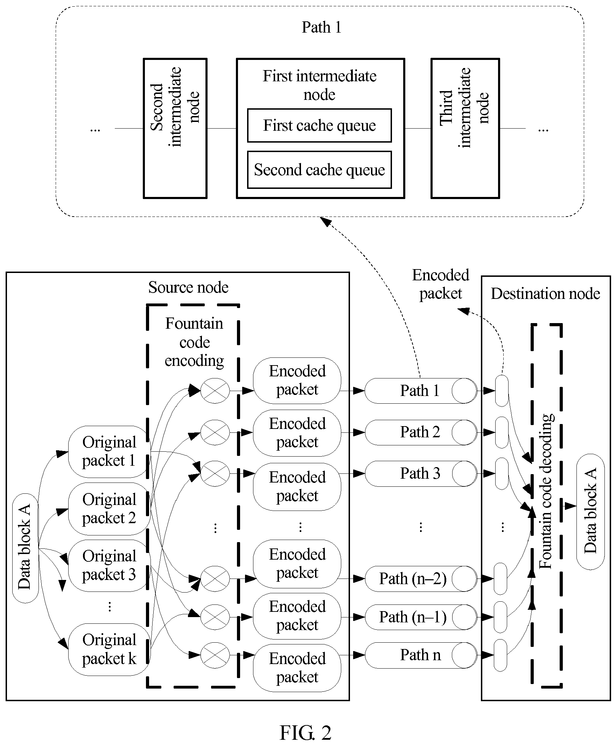

FIG. 2 is a schematic diagram of a method for transmitting data streams according to an embodiment of the present disclosure. As shown in FIG. 2, there are n transmission paths (such as a path 1, a path 2, ..., and a path n that are shown in FIG. 2) between a source node and a destination node. Each transmission path includes at least one intermediate node, such as a first, second, or third intermediate node on the path 1 shown in FIG. 2. Specifically, for example, the source node is corresponding to a server in the architecture shown in FIG. 1, and the destination node is corresponding to another server in the architecture shown in FIG. 1. There are multiple transmission paths between the two servers. Correspondingly, intermediate nodes on the n paths shown in FIG. 2 may be switches, routers, or servers. For example, the intermediate nodes are corresponding to some switches or routers in the architecture shown in FIG. 1.

The source node transmits a data block A to the destination node by using the n transmission paths. An encoded form of the data block A is a fountain code. Specifically, the source node divides the data block A into k packets (Packet), and then encodes the k packets by using a fountain code technology, so as to obtain encoded data. For ease of differentiation and description, in this specification, the packets obtained after the data block is divided are denoted as original packets (Original Packet), and the encoded data obtained after the original packets are encoded by using the fountain code technology is denoted as an encoded packet (Encoded Packet). As shown in FIG. 2, the data block A is divided so as to obtain k original packets, and the k original packets are encoded by using the fountain code technology so as to obtain multiple encoded packets (due to a limitation of drawing, FIG. 2 shows only n encoded packets for example). For example, original packets 1 and 2 are encoded to obtain a first encoded packet shown in FIG. 2; an original packet 2 is encoded to obtain a second encoded packet shown in FIG. 2; and original packets 1 and k are encoded to obtain a third encoded packet shown in FIG. 2. The source node sends, by using the n paths, an encoded packet obtained by means of encoding to the destination node.

The destination node receives, by using the n paths, the encoded packet sent by the source node, and then decodes the received encoded packet by using the fountain code technology, so as to obtain a corresponding original packet. When all the k original packets are obtained by means of decoding, the destination node obtains the data block A. That is, the data block A is transmitted from the source node to the destination node.

A data stream corresponding to the data block A shown in FIG. 2 is denoted as a first data stream. The intermediate nodes on the n transmission paths are used to transmit the first data stream. In other words, the n transmission paths are used to forward the encoded packets of the data block A, so as to finally transmit the data block A to the destination node. In an example of a first intermediate node shown in FIG. 2, the first intermediate node allocates a first cache queue to the first data stream. As shown in an enlarged drawing of the path 1 in FIG. 2, the first cache queue is specially used for caching the first data stream. For example, the first intermediate node receives an encoded packet sent by a second intermediate node. The first intermediate node determines that the encoded packet belongs to the first data stream, and then determines whether usage of the first cache queue exceeds a threshold. The threshold is maximum allowed usage of the first cache queue. If the usage of the first cache queue exceeds the threshold, the intermediate node drops the encoded packet; or if the usage of the first cache queue does not exceed the threshold, the intermediate node caches the encoded packet into the first cache queue, and subsequently sends the encoded packet cached in the first cache queue to a third intermediate node. The third intermediate node subsequently forwards the received encoded packet to a next-hop intermediate node. By analogy, the process continues until the encoded packet is sent to the destination node.

It should be understood that the source node may be considered as a sending device used to first send the first data stream, the intermediate node may be considered as a forwarding device used to forward the first data stream, and the destination node may be considered as a receiving device used to finally receive the first data stream with no further forwarding. Specifically, for example, the intermediate node in this embodiment of the present disclosure may be a network device having a data forwarding function, such as a switch or a router.

It should be noted that the source node in this embodiment of the present disclosure may be a server or a terminal device (such as a personal computer or a handheld terminal), the destination node may be a server or a terminal device (such as a personal computer or a handheld terminal), and the intermediate node may be a server, a switch, a router, or a terminal device having a forwarding function (such as a personal computer or a handheld terminal).

In this embodiment of the present disclosure, the fountain code (Fountain Code) technology is used. The fountain code means that a transmit end performs random encoding, to generate any quantity of encoded packets by using k original packets; and the transmit end continuously sends an encoded packet without knowing whether the encoded packets are successfully received. A receive end may successfully restore, by means of decoding, all the original packets with a high probability (related to e), provided that the receive end receives any subset of k(1+e) encoded packets.

The fountain code may be classified into a random linear fountain code, an LT (Luby Transform) code, and a Raptor code. The LT code is a first fountain code solution having practical performance. An encoding/decoding method of the LT code is: distributing, at the transmit end according to a specific degree (d), d original packets randomly selected from the k original packets; then performing an XOR operation on the selected d original packets, so as to obtain an encoded packet; and sending the encoded packet to the receive end. The receive end can obtain, by means of decoding, the k original packets with a probability that is not less than (1-e), provided that the receive end receives n (n is greater than k) encoded packets. e is a probability that the receive end cannot restore the encoded packet. e progressively decreases as n increases. When n tends to be infinite (that is, the receive end receives an infinite quantity of encoded packets), e tends to be zero. Appropriate degree distribution is a key to LT code performance. It is analyzed, according to an LT code encoding/decoding theory, that when an input data amount exceeds 10⁴, a relatively high decoding success rate can be ensured with 5% redundant information. The source node randomly distributes all the original packets of the data block to encoded packets according to a selected encoding algorithm, and continuously "ejects", as a fountain, an encoded packet to the destination node, without knowing whether the encoded packets are successfully received by the destination node. The destination node can obtain, by means of decoding, all the original packets provided that the destination node receives sufficient encoded packets (whose quantity is greater than a quantity of the original packets), so as to restore the data block. Experimental data shows that when a quantity of encoded packets received by the destination node is 1.704 times (an average value) the quantity of the original packets, the destination node can obtain, by means of decoding, all the original packets. It should be understood that this multiple is related to k, d, and a network path congestion degree. It should be understood that if a packet loss occurs on the fountain code in a sending process, it is unnecessary to feed back a receiving status to the source node, that is, it is unnecessary to instruct the source node to retransmit a lost packet. It should be noted that for the fountain code, when the destination node obtains, by means of decoding, all the original packets, it is necessary to feed back a receiving status to the source node, so as to instruct the source node to stop sending an encoded packet.

In this embodiment of the present disclosure, a fountain code technology is used to process a first data stream, so that reliable transmission of the first data stream can be effectively ensured. In addition, it should be understood that compared with a conventional retransmission mechanism, the fountain code technology does not need a feedback channel, but needs only a forward link, so that bandwidth resource occupation caused by a feedback loop in the conventional retransmission mechanism can be avoided. Therefore, compared with the existing retransmission mechanism, in this embodiment of the present disclosure, on a basis of ensuring reliable transmission of data, network congestion can be further reduced to some extent.

In this embodiment of the present disclosure, when usage of a first cache queue allocated to a first data stream exceeds a threshold, a currently-received encoded packet of the first data stream is dropped. The threshold is maximum allowed usage of the first cache queue. Network congestion can be reduced to some extent by performing aggressive packet dropping on the first data stream. An encoded form of the first data stream is a fountain code. Fountain code-based data transmission can ensure data transmission reliability without retransmission. Therefore, performing aggressive packet dropping on the first data stream does not cause a throughput loss of the first data stream, but may still ensure reliable transmission of the first data stream. In this embodiment of the present disclosure, no closed-loop feedback is used, thereby avoiding a problem in an existing method that feedback control occupies an extra network bandwidth resource. Therefore, in this embodiment of the present disclosure, on a premise that no closed-loop feedback needs to be used, reliable transmission of a data stream can be ensured, network congestion can be reduced, and implementation complexity can be reduced compared with the prior art. The first data stream in this embodiment of the present disclosure may be a delay-sensitive stream, specifically, such as a mouse flow that is in a data center network and that has a strict requirement on a delay.

Optionally, in this embodiment of the present disclosure, the method for transmitting data streams is applied to a multipath transmission system. The multipath transmission system includes multiple transmission paths. The multiple transmission paths are used for transmitting the data streams. The first intermediate node represents each intermediate node on the multiple transmission paths.

Specifically, for example, in the scenario shown in FIG. 2, all intermediate nodes included on each of the n paths have the structure and functions of the first intermediate node shown in FIG. 2. That is, each intermediate node on the n paths allocates a first cache queue to the first data stream, and when usage of the first cache queue exceeds the threshold, aggressively drops a currently-received encoded packet of the first data stream. This can effectively reduce network congestion on each of the multiple transmission paths, and therefore can reduce a transmission delay of the first data stream.

It should be understood that the multipath transmission system may include multiple source nodes and multiple destination nodes. A correspondence between a source node and a destination node may be determined by a network topology in a specific scenario. As an example rather than a limitation, one source node and one destination node that are shown in FIG. 2 are only used as an example for description in this embodiment of the present disclosure.

Optionally, in this embodiment of the present disclosure, the first data stream may represent each service data stream in the multipath transmission system.

Specifically, each service data stream in the multipath transmission system is processed according to the processing manner of the first data stream. Therefore, a requirement on low-delay reliable transmission of all data streams transmitted in the multipath transmission system can be met.

Multiple different types of services may be deployed in a multipath transmission system. The different types of services are corresponding to various data streams transmitted in the multipath transmission system. In services deployed in the multipath transmission system, some services have a relatively strict requirement on an end-to-end transmission delay, so that data streams corresponding to these services have an urgent requirement on low-delay reliable transmission. For different service requirements, data streams transmitted in the multipath transmission system are classified into a high-priority stream (such as a delay-sensitive stream) and a low-priority stream. The high-priority stream has an urgent requirement on low-delay reliable transmission. Currently, a solution to the foregoing problem includes a stream priority distinguishing technology. A main idea of the stream priority distinguishing technology is always first processing a high-priority stream in a shared cache queue, to ensure transmission performance of the high-priority stream. However, the stream priority distinguishing technology may starve the low-priority stream.

Optionally, in this embodiment of the present disclosure, as shown in FIG. 2, the first intermediate node allocates a second cache queue to a second data stream. The second data stream is a data stream that is not processed by using a fountain code. The first intermediate node receives a packet of the second data stream sent by a previous-hop network node (such as the third intermediate node shown in FIG. 2). The first intermediate node stores the packet of the second data stream into the second cache queue. The first intermediate node sends the packet that is of the second data stream and that is cached in the second cache queue to a next-hop network node (such as the second intermediate node shown in FIG. 2).

Different from a conventional technology, in the first intermediate node in this embodiment of the present disclosure, the first data stream and the second data stream no longer share one cache queue. The first intermediate node allocates the first cache queue to the first data stream, allocates the second cache queue to the second data stream, caches a received packet of the first data stream into the first cache queue, and caches a received packet of the second data stream into the second cache queue. It should be noted that the first cache queue and the second cache queue are different cache queues, but the first cache queue and the second cache queue share physical cache space.

Specifically, in this embodiment of the present disclosure, for example, the first data stream is a high-priority stream in the multipath transmission system; and for example, the second data stream is a low-priority stream in the multipath transmission system. More specifically, the first data stream is a mouse flow in the data center network. The another data stream is an elephant flow in the data center network.

In this embodiment of the present disclosure, the first intermediate node allocates the first cache queue to the first data stream, and allocates the second cache queue to the second data stream. The first cache queue is used for caching only the first data stream, and the second cache queue is used for caching the second data stream. In other words, the first intermediate node caches the first data stream and the second data stream separately. In this case, a fountain code operation and an aggressive packet dropping operation are performed on the first data stream so as to implement low-delay reliable transmission of the first data stream, and impact on the second data stream may be avoided to a larger extent, so that a problem caused in an existing stream priority distinguishing technology that a low-priority stream starves may not occur. Therefore, compared with the existing stream priority distinguishing technology, in this embodiment of the present disclosure, on a basis of implementing low-delay reliable transmission of a high-priority stream (corresponding to the first data stream), a phenomenon that a low-priority stream (corresponding to the second data stream) starves may be avoided, thereby ensuring fairness between data streams.

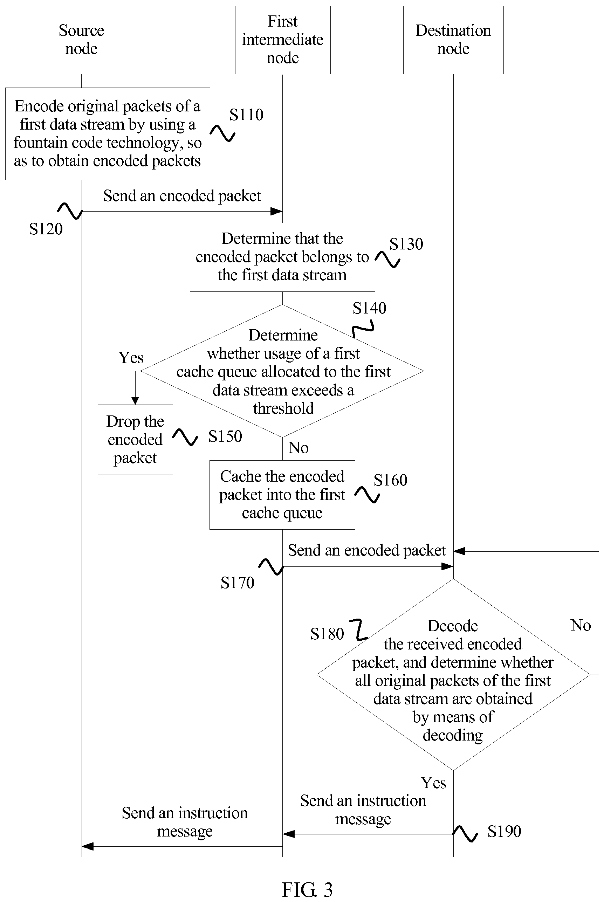

FIG. 3 is a schematic flowchart of a method 100 for transmitting data streams according to an embodiment of the present disclosure. A source node in FIG. 3 is corresponding to the source node in FIG. 2; a destination node in FIG. 3 is corresponding to the destination node in FIG. 2; and a first intermediate node in FIG. 3 is corresponding to the first intermediate node in FIG. 2. The method 100 includes the following steps.

S110. A source node divides a data block (corresponding to a data block A on a source node side shown in FIG. 2) of a to-be-sent first data stream, so as to form k original packets; and then encodes the k original packets by using a fountain code technology, so as to obtain m encoded packets, where m is greater than k. It should be understood that for ease of drawing and understanding, FIG. 2 shows only n encoded packets that are about to enter n paths, for example. To help an intermediate node on a path to identify the first data stream, the source node marks each encoded packet of the first data stream with an identifier used to indicate the first data stream. Specifically, the source node marks each of the m encoded packets with a label of a specific fixed service stream, so that the intermediate node on the path can identify the first data stream according to the label.

S120. The source node sends, to a destination node by using multiple paths (corresponding to n paths shown in FIG. 2), an encoded packet that carries the identifier used to indicate the first data stream.

S130. A first intermediate node on each of the multiple paths receives an encoded packet sent by a previous-hop network node, and determines, according to an identifier carried in the encoded packet, that the encoded packet belongs to the first data stream.

It should be understood that the previous-hop network node may be the source node, or may be a previous-hop intermediate node on a path on which the first intermediate node is located. For example, in the example scenario shown in FIG. 1, the previous-hop network node is corresponding to the third intermediate node.

S140. The first intermediate node determines whether usage of a first cache queue (corresponding to a first cache queue shown in FIG. 2)allocated to the first data stream exceeds a threshold. If the usage of the first cache queue allocated to the first data stream exceeds the threshold, go to S150; or if the usage of the first cache queue allocated to the first data stream does not exceed the threshold, go to S160.

S150. The first intermediate node determines that the usage of the first cache queue exceeds the threshold, and drops the encoded packet.

S160. The first intermediate node determines that the usage of the first cache queue does not exceed the threshold, and stores the encoded packet into the first cache queue.

S170. The first intermediate node sends the encoded packet in the first cache queue to the destination node.

It should be noted that if the first intermediate node and the destination node are physically and directly connected to each other, the first intermediate node may directly send the encoded packet to the destination node; or if the first intermediate node and the destination node are not physically and directly connected to each other, the first intermediate node indirectly sends the encoded packet to the destination node by using another forwarding node on the path on which the first intermediate node is located.

S180. The destination node receives, by using multiple paths (corresponding to the n paths in FIG. 2), the encoded packet sent by the source node, decodes the received encoded packet by using a fountain code decoding technology, and determines whether all original packets of the first data stream are obtained by means of decoding, such as the k original packets of the data block on the source node side in FIG. 1. If all the original packets of the first data stream are obtained, go to S190; or if not all the original packets of the first data stream are obtained, go to S170.

S190. When determining that all the original packets of the first data stream are obtained by means of decoding, the destination node sends, to the source node, an instruction message used to instruct to stop sending the first data stream. It should be understood that after receiving the instruction message, the first intermediate node sends the instruction message to the source node.

In this embodiment of the present disclosure, when usage of a first cache queue allocated to a first data stream exceeds a threshold, a currently-received encoded packet of the first data stream is dropped. The threshold is maximum allowed usage of the first cache queue. Network congestion can be reduced to some extent by performing aggressive packet dropping on the first data stream. An encoded form of the first data stream is a fountain code. Fountain code-based data transmission can ensure data transmission reliability without retransmission. Therefore, performing aggressive packet dropping on the first data stream does not cause a throughput loss of the first data stream, but may still ensure reliable transmission of the first data stream. In this embodiment of the present disclosure, no closed-loop feedback is used, thereby avoiding a problem in an existing method that feedback control occupies an extra network bandwidth resource. Therefore, in this embodiment of the present disclosure, on a premise that no closed-loop feedback needs to be used, reliable transmission of a data stream can be ensured, network congestion can be reduced, and implementation complexity can be reduced compared with the prior art.

Specifically, in S110, the action of encoding the k original packets by using the fountain code technology may be executed by an encoder on the source node side. Specifically, a Central Processing Unit (CPU) of the encoder may be a single-core CPU, so that the encoder may serially output encoded packets. Alternatively, the CPU of the encoder may be a multi-core CPU, so that the encoder may output encoded packets in parallel. In the future, based on a Network Interface Card (NIC)(a network adapter) of a Field-Programmable Gate Array (FPGA), parallel processing of encoding and decoding may be implemented by using hardware. It should be understood that the encoder may be a function module in the source node, or may be an encoder device independent of the source node.

In this embodiment of the present disclosure, for a specific encoding manner of the first data stream, a Luby Transform (LT) encoding manner may be used. An LT code is a practicable fountain code manner. In addition to the LT encoding manner, another fountain code encoding manner may be used. This is not limited in this embodiment of the present disclosure.

Specifically, in S120, the source node continuously sends an encoded packet of the first data stream to the destination node by using multiple paths and by using equal allocation and polling mechanisms. For a polling form, there is no strict correspondence of content or a sequence. As shown in FIG. 1, the n paths between the source node and the destination node are denoted as a path list. The source node allocates the first encoded packet to a first path (the path 1 shown in FIG. 1) in the path list for sending, allocates a generated second encoded packet to a second path (the path 2 shown in FIG. 1) in the path list for sending, allocates a generated third encoded packet to a third path (the path 3 shown in FIG. 1) in the path list for sending, and by analogy, allocates a generated n^{th} encoded packet to an n^{th} path (the path n in FIG. 1) in the path list for sending. In this case, the bottom of the path list is reached. A subsequently-generated encoded packet is allocated re-starting from the top of the path list. For example, a generated (n+1)^{th} encoded packet is allocated to the first path (the path 1 shown in FIG. 1) in the path list for sending, a generated (n+2)^{th} encoded packet is allocated to the second path (the path 2 shown in FIG. 1) in the path list for sending, and so on.

Specifically, in step S120, a scheduler on the source node side may allocate an encoded packet to a corresponding path, and a transmitter on the source node side may send the encoded packet. The scheduler and the transmitter are function modules in the source node.

In step S140, the first intermediate node determines whether the usage of the first cache queue allocated to the first data stream exceeds the threshold. In this embodiment of the present disclosure, the usage of the first cache queue is represented in any one of the following forms: a space occupation size, a space occupation percentage, or a space occupation ratio. The threshold indicates maximum allowed usage of the first cache queue. Specifically, for example, overall cache space of the first intermediate node is 10 M, storage space configured for the first cache queue is 5 M, and storage space configured for the second cache queue is 5 M. It is assumed that a representation form of the usage of the first cache queue is defined as the space occupation size. In this case, the threshold of the first cache queue is set to be 4 M. It is assumed that a representation form of the usage of the first cache queue is defined as the space occupation percentage. In this case, the threshold of the first cache queue is set to be 80%. It is assumed that a representation form of the usage of the first cache queue is defined as the space occupation ratio. In this case, the threshold of the first cache queue is set to be 0.8.

In step S140, when determining that the usage of the first cache queue exceeds the threshold, the first intermediate node drops the currently-received encoded packet. Compared with the prior art in which a packet loss occurs when a shared cache queue of an intermediate node is overflown, the packet dropping in this embodiment of the present disclosure may be referred to as aggressive dropping.

Specifically, in S180, the action of decoding the received encoded packet by using the fountain code decoding technology may be executed by a decoder on the destination node side. Specifically, the decoder may be a function module in the destination node, or may be a decoder device independent of the destination node.

It should be understood that the encoded packet carries information about an original packet. For example, the first encoded packet shown in FIG. 1 is obtained by means of encoding based on the original packet 1 and the original packet 2, so that the first encoded packet includes information that can identify the original packet 1 and the original packet 2. The destination node can obtain all the original packets by decoding received encoded packets.

Specifically, in S190, a size of the instruction message that is sent by the destination node and that is used to instruct to stop sending an encoded packet of the first data stream is 1 bit.

In the prior art, a receiving status of the data stream is usually fed back to the source node by using an ACK packet, and transmission of the ACK packet occupies some network bandwidth resources. In this embodiment of the present disclosure, a status of receiving the first data stream by the destination node is fed back to the source node by using a 1-bit instruction message. Compared with the ACK packet in the prior art, the 1-bit instruction message used in this embodiment of the present disclosure effectively reduces network bandwidth occupation, and therefore helps reduce network congestion.

Optionally, in this embodiment of the present disclosure, in S190, if the destination node receives an encoded packet again that is of the first data stream and that is sent by the source node within preset duration after sending the instruction message, the destination node sends the instruction message to the source node again, until no encoded packet of the first data stream is received within the preset duration after the instruction message is sent.

Specifically, the destination node may send the instruction message to the source node by using multiple paths. This can enhance a probability that the instruction message is successfully sent to the source node, so that the source node receives the instruction message as early as possible and stops sending the first data stream, so as to avoid network transmission resource waste caused by sending unnecessary data.

Optionally, in this embodiment of the present disclosure, the instruction message sent by the destination node is further used to instruct to drop the first data stream. In S190, the first forwarding node receives the instruction message, and drops, according to the instruction message, an encoded packet that is of the first data stream and that is cached in the first cache queue.

It should be understood that when a destination node obtains, by means of decoding, all the original packets of a first data stream, an encoded packet that is of the first data stream and that exists in a network is aggressively dropped. This avoids invalid transmission, and helps reduce network congestion.

It should be understood that the source node divides a to-be-sent message (Message) into several data blocks (Block) that are of equal length. Each data block is further divided into several packets (Packet) (to differentiate the packets from an encoded packet, the packets herein are denoted as original packets) that are of equal length. The original packets are encoded by using a fountain code encoding technology, so as to form an encoded packet. Then the encoded packet is sent by using multiple paths. For example, the length of the message block (Block) is represented by using L, and a unit of L is bytes. It is assumed that an overall rate is r, and a unit of r is bps. There are n available paths used for transmitting a message whose length is L bytes. It is assumed that transmission rates of transmitting the data stream on the n paths are respectively r1, r2, ..., and rn. In this case, an overall rate of transmitting the data block of L bytes on the multiple paths is r = r1 + r2 + ... + rn, where rn represents a rate on an n^{th} path. Therefore, in this embodiment of the present disclosure, a source node sends an encoded packet to a destination node by using multiple paths, so that bandwidth of the multiple paths can be appropriately used, and a data transmission rate can be effectively enhanced.

Optionally, in this embodiment of the present disclosure, the first data stream may be transmitted based on the User Datagram Protocol (UDP). Specifically, that the source node sends an encoded packet of the first data stream, that the intermediate node forwards the encoded packet, and that the destination node receives the encoded packet are all based on the UPD. In addition, based on the UDP, the destination node may also send, to the source node, the instruction message used to instruct to stop sending the first data stream.

It should be understood that in this embodiment of the present disclosure, after determining that all original packets of a current data block are obtained by means of decoding, if the destination node receives an encoded packet of the same data block again, the destination node drops the encoded packet, and sends, to the source node again, the instruction message used to instruct to stop sending an encoded packet of the current data block.

It should be further understood that the instruction message sent by the destination node to the source node may be dropped in a transmission process, and cannot successfully arrive at the source node. In this embodiment of the present disclosure, after sending the instruction message, if the destination node receives an encoded packet of a same data block again within preset duration from a moment at which the instruction message is sent, the destination node resends the instruction message, and until no encoded packet of the same data block is received within the preset duration, stops sending the instruction message. The instruction message in this embodiment of the present disclosure may also be referred to as a "STOP" signal.

It should be further understood that after receiving the instruction message used to instruct to stop sending an encoded packet of the first data stream, the source node stops sending the encoded packet of the first data stream. A next data stream may be sent subsequently. For example, the next data stream may be sent by using the method in this embodiment of the present disclosure.

The method for transmitting data streams by using multiple paths in this embodiment of the present disclosure may be referred to as Cloudburst. As a processed object, the first data stream may be referred to as a Cloudburst data stream.

In conclusion, in this embodiment of the present disclosure, when usage of a first cache queue allocated to a first data stream exceeds a threshold, a currently-received encoded packet of the first data stream is dropped. The threshold is maximum allowed usage of the first cache queue. Network congestion can be reduced to some extent by performing aggressive packet dropping on the first data stream. An encoded form of the first data stream is a fountain code. Fountain code-based data transmission can ensure data transmission reliability without retransmission. Therefore, performing aggressive packet dropping on the first data stream does not cause a throughput loss of the first data stream, but may still ensure reliable transmission of the first data stream. In this embodiment of the present disclosure, no closed-loop feedback is used, thereby avoiding a problem in an existing method that feedback control occupies an extra network bandwidth resource. Therefore, in this embodiment of the present disclosure, on a premise that no closed-loop feedback needs to be used, reliable transmission of a data stream can be ensured, network congestion can be reduced, and implementation complexity can be reduced compared with the prior art.

In addition, in an existing congestion avoidance technology, a data stream is scheduled by means of closed-loop control. When network congestion is detected, rate limiting is performed on a network ingress. For example, after receiving network congestion information, the source node imposes a limitation on a sending rate of a data stream. However, in this embodiment of the present disclosure, because no closed-loop feedback is used, the source node may keep sending an encoded packet of the first data stream at a fixed rate. In this way, provided that no congestion occurs on a path, an encoded packet sent by the source node may be transmitted to the destination node. In addition, when the usage of the first cache queue exceeds the threshold, a first intermediate node in the path takes an action of aggressive packet dropping, so that network congestion may be effectively reduced, and therefore, in this embodiment of the present disclosure, the first data stream sent by the source node may arrive at the destination node with a relatively low transmission delay. Therefore, compared with the existing congestion avoidance technology, in this embodiment of the present disclosure, network congestion may be reduced when no complex control mechanism is needed, and a data transmission delay may be reduced to some extent.

It should be further understood that the examples shown in FIG. 2 and FIG. 3 are intended to better help a person skilled in the art to better understand this embodiment of the present disclosure, but are not intended to limit this embodiment of the present disclosure to these specific forms. A person skilled in the art certainly can make various equivalent modifications or changes according to examples given in FIG. 2 and FIG. 3, and such modifications or changes also fall within the protection scope of the embodiments of the present disclosure.

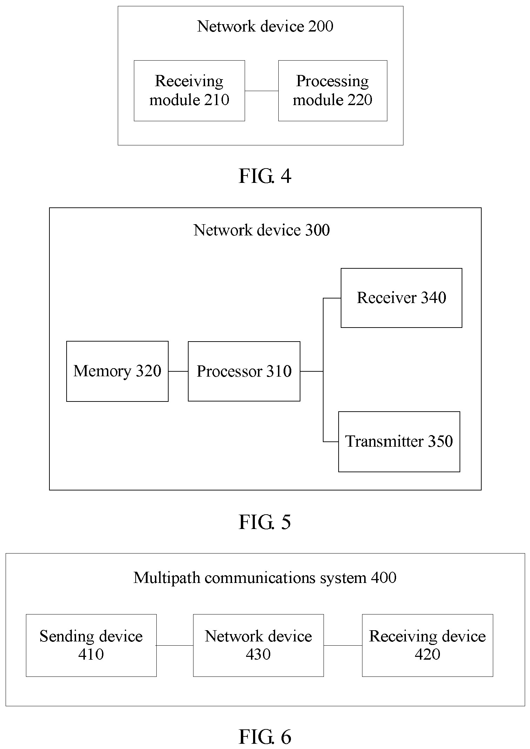

FIG. 4 is a schematic block diagram of a network device 200 according to an embodiment of the present disclosure. The network device 200 is configured to transmit data streams between a source node and a destination node. The data streams include a first data stream whose encoded form is a fountain code. The network device 200 includes:
a receiving module 210, configured to receive an encoded packet sent by the source node or an intermediate node, where the encoded packet is a packet obtained by encoding an original packet of the first data stream with a fountain code technology; and the intermediate node is located between the source node and the destination node, and is used to forward data between the source node and the destination node; and
a processing module 220, configured to: when usage of a first cache queue exceeds a threshold, drop the encoded packet received by the receiving module, where the first cache queue is a cache queue in the network device and the first cache queue is allocated to the first data stream, and the threshold indicates maximum allowed usage of the first cache queue.

In this embodiment of the present disclosure, when usage of a first cache queue allocated to a first data stream exceeds a threshold, a currently-received encoded packet of the first data stream is dropped. The threshold is maximum allowed usage of the first cache queue. Network congestion can be reduced to some extent by performing aggressive packet dropping on the first data stream. An encoded form of the first data stream is a fountain code. Fountain code-based data transmission can ensure data transmission reliability without retransmission. Therefore, performing aggressive packet dropping on the first data stream does not cause a throughput loss of the first data stream, but may still ensure reliable transmission of the first data stream. In this embodiment of the present disclosure, no closed-loop feedback is used, thereby avoiding a problem in an existing method that feedback control occupies an extra network bandwidth resource. Therefore, in this embodiment of the present disclosure, on a premise that no closed-loop feedback needs to be used, reliable transmission of a data stream can be ensured, network congestion can be reduced, and implementation complexity can be reduced compared with the prior art.

Optionally, in this embodiment of the present disclosure, the processing module 220 is further configured to: when the usage of the first cache queue does not exceed the threshold, store the encoded packet received by the receiving module into the first cache queue.

The network device 200 further includes a first sending module, configured to send the encoded packet cached in the first cache queue to the destination node.

Optionally, in this embodiment of the present disclosure, the receiving module 210 is further configured to: receive an instruction message, where the instruction message is sent by the destination node when the destination node obtains, by means of decoding based on received encoded packets, all original packets of the first data stream, the instruction message is used to instruct the source node to stop sending the first data stream, and a size of the instruction message is 1 bit.

The network device 200 further includes a second sending module, configured to send the instruction message received by the receiving module to the source node.

Optionally, in this embodiment of the present disclosure, the instruction message is further used to instruct to drop the first data stream. The processing module 220 is further configured to drop, according to the instruction message, an encoded packet that is of the first data stream and that is cached in the first cache queue.

Optionally, in this embodiment of the present disclosure, the data streams further include a second data stream whose encoded form is not a fountain code. The receiving module 210 is further configured to receive a packet of the second data stream.

The processing module 220 is further configured to store the packet that is of the second data stream and that is received by the receiving module into a second cache queue, where the second cache queue is a cache queue allocated to the second data stream by the network device.

The network device 200 further includes a third sending module, configured to send the packet that is of the second data stream and that is cached in the second cache queue to the destination node.

It should be understood that the network device 200 according to this embodiment of the present disclosure may be corresponding to the forwarding device in the method for transmitting data streams in the embodiments of the present disclosure, and the foregoing and other operations and/or functions of the modules of the network device 200 are respectively used to implement corresponding procedures of methods in FIG. 2 to FIG. 3. For brevity, details are not described herein.

Specifically, the processing module 220 in the network device 200 may be implemented by a processor or a related component of the processor in the network device 200. The receiving module 210 may be implemented by a receiver or a related component of the receiver in the network device 200. The first sending module, the second sending module, and the third sending module may be implemented by a transmitter or a related component of the transmitter in the network device 200.

As shown in FIG. 5, an embodiment of the present disclosure further provides a network device 300. The network device 300 is configured to transmit data streams between a source node and a destination node. The data streams include a first data stream whose encoded form is a fountain code. The network device 300 includes a processor 310, a memory 320, a receiver 340, and a transmitter 350. The processor 310, the memory 320, the receiver 340, and the transmitter 350 communicate by using an internal communication link. The memory 320 is configured to store an instruction. The processor 310 is configured to execute the instruction stored in the memory 320, so as to control the receiver 340 to receive a signal, and control the transmitter 350 to send a signal. The receiver 340 is configured to receive an encoded packet sent by the source node or an intermediate node, where the encoded packet is a packet obtained by encoding an original packet of the first data stream with a fountain code technology; and the intermediate node is located between the source node and the destination node, and is used to forward data between the source node and the destination node. The processor 310 is configured to: when usage of a first cache queue exceeds a threshold, drop the encoded packet received by thereceiver340, where the first cache queue is a cache queue in the network device and the first cache queue is allocated to the first data stream, and the threshold indicates maximum allowed usage of the first cache queue.

In this embodiment of the present disclosure, when usage of a first cache queue allocated to a first data stream exceeds a threshold, a currently-received encoded packet of the first data stream is dropped. The threshold is maximum allowed usage of the first cache queue. Network congestion can be reduced to some extent by performing aggressive packet dropping on the first data stream. An encoded form of the first data stream is a fountain code. Fountain code-based data transmission can ensure data transmission reliability without retransmission. Therefore, performing aggressive packet dropping on the first data stream does not cause a throughput loss of the first data stream, but may still ensure reliable transmission of the first data stream. In this embodiment of the present disclosure, no closed-loop feedback is used, thereby avoiding a problem in an existing method that feedback control occupies an extra network bandwidth resource. Therefore, in this embodiment of the present disclosure, on a premise that no closed-loop feedback needs to be used, reliable transmission of a data stream can be ensured, network congestion can be reduced, and implementation complexity can be reduced compared with the prior art.

Optionally, in this embodiment of the present disclosure, the processor 310 is further configured to: when the usage of the first cache queue does not exceed the threshold, store the encoded packet received by the receiver 340 into the first cache queue. The transmitter 350 is configured to send the encoded packet cached in the first cache queue to the destination node.

Optionally, in this embodiment of the present disclosure, the receiver 340 is further configured to: receive an instruction message, where the instruction message is sent by the destination node when the destination node obtains, by means of decoding based on received encoded packets, all original packets of the first data stream, the instruction message is used to instruct the source node to stop sending the first data stream, and a size of the instruction message is 1 bit. The transmitter 350 is further configured to send the instruction message to the source node.

Optionally, in this embodiment of the present disclosure, the instruction message is further used to instruct to drop the first data stream. The processor 310 is further configured to drop, according to the instruction message received by the receiver 340, an encoded packet that is of the first data stream and that is cached in the first cache queue.

Optionally, in this embodiment of the present disclosure, the data streams further include a second data stream whose encoded form is not a fountain code. The receiver 340 is further configured to receive a packet of the second data stream.

The processor 310 is configured to store the packet that is of the second data stream and that is received by the receiver 340 into a second cache queue, where the second cache queue is a cache queue allocated to the second data stream by the network device.

The transmitter 350 is further configured to send the packet that is of the second data stream and that is cached in the second cache queue to the destination node.

It should be understood that in this embodiment of the present disclosure, the processor 310 may be a Central Processing Unit ("CPU" for short), or the processor 310 may be another general purpose processor, a digital signal processor (DSP), an application-specific integrated circuit (ASIC), a field-programmable gate array (FPGA), or another programmable logic device, discrete gate or transistor logic device, discrete hardware assembly, or the like. The general purpose processor may be a microprocessor, or the processor may be any conventional processor, or the like.

The memory 320 may include a read-only memory and a random access memory, and provides an instruction and data for the processor 310. A part of the memory 320 may further include a nonvolatile random access memory. For example, the memory 320 may further store information about a device type.

In an implementation process, the steps in the foregoing methods may be completed by using an integrated logic circuit of hardware in the processor 310 or an instruction in a form of software. The steps of the method disclosed with reference to the embodiments of the present disclosure may be directly performed and completed by a hardware processor, or may be performed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 320. The processor 310 reads information in the memory 320, and completes the steps of the foregoing methods in combination with hardware of the processor 310. To avoid repetition, details are not described herein.

It should be understood that the transmitter 350 may be a hardware circuit or a device used to implement a sending function, such as an antenna or a network interface card. Similarly, the receiver 340 may also be a hardware circuit or a device used to implement a receiving function, such as an antenna or a network interface card. This is not limited in this embodiment of the present disclosure.

It should be further understood that the receiver 340 and the transmitter 350 may be implemented by one apparatus that has receiving and sending functions, such as a receiver 340, and specifically, such as an antenna.

It should be understood that the network device 300 according to this embodiment of the present disclosure may be corresponding to a forwarding device in the method for transmitting data streams in the embodiments of the present disclosure, and may also be corresponding to the network device 200 in the embodiments of the present disclosure, and the foregoing and other operations and/or functions of the modules of the network device 300 are respectively used to implement corresponding procedures of methods in FIG. 2 and FIG. 3. For brevity, details are not described herein.

FIG. 6 is a schematic block diagram of a multipath transmission system 400 according to an embodiment of the present disclosure. The multipath transmission system 400 includes: a sending device 410, a receiving device 420, and a network device 430. There are multiple paths between the sending device 410 and the receiving device 420. The network device 430 is a forwarding device on the multiple paths. The network device 430 is corresponding to the forwarding device in the method for transmitting data streams in the embodiments of the present disclosure. The network device 430 is further corresponding to the network device 200 or the network device 300 in the embodiments of the present disclosure.

In this embodiment of the present disclosure, when usage of a first cache queue allocated to a first data stream exceeds a threshold, a currently-received encoded packet of the first data stream is dropped. The threshold is maximum allowed usage of the first cache queue. Network congestion can be reduced to some extent by performing aggressive packet dropping on the first data stream. An encoded form of the first data stream is a fountain code. Fountain code-based data transmission can ensure data transmission reliability without retransmission. Therefore, performing aggressive packet dropping on the first data stream does not cause a throughput loss of the first data stream, but may still ensure reliable transmission of the first data stream. In this embodiment of the present disclosure, no closed-loop feedback is used, thereby avoiding a problem in an existing method that feedback control occupies an extra network bandwidth resource. Therefore, in this embodiment of the present disclosure, on a premise that no closed-loop feedback needs to be used, reliable transmission of a data stream can be ensured, network congestion can be reduced, and implementation complexity can be reduced compared with the prior art.

It should be understood that as an example rather than a limitation, the foregoing describes an application scenario of the embodiments of the present disclosure by using a data center network as an example. The embodiments of the present disclosure may be further applied to a communication scenario that is in terminal cloud communication and in which multiple physical paths exist and WiFi or Long Term Evolution (LTE) is used. This is not limited in the embodiments of the present disclosure.

It should be further understood that numerical symbols included in this specification are differentiated merely for ease of description, but are not used to limit the scope of the embodiments of the present disclosure.

It should be further understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a Read-Only Memory (ROM), a Random Access Memory (RAM), a magnetic disk, or an optical disc.

The foregoing descriptions are merely specific implementations in this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method (100) for transmitting data streams, wherein in the method, the data streams are transmitted between a source node and a destination node by using at least one intermediate node; the data streams comprise a first data stream whose encoded form is a fountain code; and the method comprises:
receiving (S130), by a first intermediate node, an encoded packet sent by the source node or a second intermediate node, wherein the encoded packet is a packet obtained by encoding an original packet of the first data stream with a fountain code technology; and
dropping (S150), by the first intermediate node, the encoded packet when the usage of a first cache queue exceeds a threshold, wherein the first cache queue is in the first intermediate node and the first cache queue is a cache queue allocated to the first data stream, and the threshold indicates maximum allowed usage of the first cache queue, **characterized in that** the method further comprises:
receiving, by the first intermediate node, an instruction message, wherein the instruction message is sent by the destination node when the destination node obtains, by means of decoding based on received encoded packets, all original packets of the first data stream, the instruction message is used to instruct the source node to stop sending the first data stream, and a size of the instruction message is 1 bit;
sending, by the first intermediate node, the instruction message to the source node, wherein the instruction message is further used to instruct to drop the first data stream; and
dropping, by the first intermediate node according to the instruction message, an encoded packet that is of the first data stream and that is stored in the first cache queue.

2. The method according to claim 1, wherein the method further comprises:
when the usage of the first cache queue does not exceed the threshold, storing (S160), by the first intermediate node, the encoded packet into the first cache queue; and
sending (S170), by the first intermediate node, the encoded packet stored in the first cache queue to the destination node.

3. The method according to claim 1 or 2, wherein the data streams further comprise a second data stream whose encoded form is not a fountain code, and the method further comprises:
receiving, by the first intermediate node, a packet of the second data stream;
storing, by the first intermediate node, the packet of the second data stream into a second cache queue, wherein the second cache queue is a cache queue allocated to the second data stream by the first intermediate node; and
sending, by the first intermediate node, the packet that is of the second data stream and that is cached in the second cache queue to the destination node.

4. A network device (200), , working as a first intermediate node, wherein the network device is configured to transmit data streams between a source node and a destination node; the data streams comprise a first data stream whose encoded form is a fountain code; and the network device comprises:
a receiving module (210), configured to receive an encoded packet sent by the source node or an intermediate node, wherein the encoded packet is a packet obtained by encoding an original packet of the first data stream with a fountain code technology; and the intermediate node is located between the source node and the destination node, and is used to forward data between the source node and the destination node; and
a processing module (220), configured to: drop the encoded packet received by the receiving module when the usage of a first cache queue exceeds a threshold, wherein the first cache queue is a cache queue in the first intermediate node and the first cache queue is allocated to the first data stream, and the threshold indicates maximum allowed usage of the first cache queue, **characterized in that**:
the receiving module is further configured to: receive an instruction message, wherein the instruction message is sent by the destination node when the destination node obtains, by means of decoding based on received encoded packets, all original packets of the first data stream, the instruction message is used to instruct the source node to stop sending the first data stream, and a size of the instruction message is 1 bit; and
the network device further comprises a second sending module, configured to send the instruction message received by the receiving module to the source node,
wherein the instruction message is further used to instruct to drop the first data stream; and the processing module is further configured to drop, according to the instruction message, an encoded packet that is of the first data stream and that is stored in the first cache queue.

5. The network device according to claim 4, wherein the processing module is further configured to: when the usage of the first cache queue does not exceed the threshold, store the encoded packet received by the receiving module into the first cache queue; and
the network device further comprises a first sending module, configured to send the encoded packet stored in the first cache queue to the destination node.

6. The network device according to claim 4 or 5, wherein the data streams further comprise a second data stream whose encoded form is not a fountain code, and the receiving module is further configured to receive a packet of the second data stream;
the processing module is further configured to store the packet that is of the second data stream and that is received by the receiving module into a second cache queue, wherein the second cache queue is a cache queue allocated to the second data stream by the network device; and
the network device further comprises a third sending module, configured to send the packet that is of the second data stream and that is stored in the second cache queue to the destination node.

7. A non-transitory computer-readable medium storing computer instructions for transmitting data streams, that when executed by one or more processors, cause the one or more processors to perform the method of claim 1 to 3.

## Patentansprüche

1. Verfahren (100) zum Übertragen von Datenströmen, wobei im Verfahren die Datenströme zwischen einem Quellknoten und einem Zielknoten unter Verwendung von mindestens einem Zwischenknoten übertragen werden; die Datenströme einen ersten Datenstrom umfassen, dessen codierte Form ein "Fountain-Code" ist; und das Verfahren umfasst:
Empfangen (S130), durch einen ersten Zwischenknoten, eines codierten Pakets, das durch den Quellknoten oder einen zweiten Zwischenknoten gesendet wird, wobei das codierte Paket ein Paket ist, das durch Codieren eines ursprünglichen Pakets des ersten Datenstroms mit einer "Fountain-Code"-Technologie erhalten wird; und
Verwerfen (S150), durch den ersten Zwischenknoten, des codierten Pakets, wenn die Nutzung einer ersten Cache-Warteschlange einen Schwellenwert überschreitet, wobei sich die erste Cache-Warteschlange im ersten Zwischenknoten befindet und die erste Cache-Warteschlange eine Cache-Warteschlange ist, die dem ersten Datenstrom zugewiesen ist, und der Schwellenwert eine maximal zulässige Nutzung der ersten Cache-Warteschlange angibt, **dadurch gekennzeichnet, dass** das Verfahren ferner umfasst:
Empfangen, durch den ersten Zwischenknoten, einer Anweisungsnachricht, wobei die Anweisungsnachricht vom Zielknoten gesendet wird, wenn der Zielknoten mittels Decodierung auf der Grundlage empfangener codierter Pakete alle ursprünglichen Pakete des ersten Datenstroms erhält, die Anweisungsnachricht dazu verwendet wird, den Quellknoten anzuweisen, das Senden des ersten Datenstroms zu stoppen, und eine Größe der Anweisungsnachricht 1 Bit beträgt;
Senden, durch den ersten Zwischenknoten, der Anweisungsnachricht an den Quellknoten, wobei die Anweisungsnachricht ferner zum Anweisen verwendet wird, den ersten Datenstrom zu verwerfen; und
Verwerfen, durch den ersten Zwischenknoten gemäß der Anweisungsnachricht, eines codierten Pakets, das zum ersten Datenstrom gehört und in der ersten Cache-Warteschlange gespeichert ist.

2. Verfahren nach Anspruch 1, wobei das Verfahren ferner umfasst:
wenn die Nutzung der ersten Cache-Warteschlange den Schwellenwert nicht überschreitet, Speichern (S160), durch den ersten Zwischenknoten, des codierten Pakets in der ersten Cache-Warteschlange; und
Senden (S170), durch den ersten Zwischenknoten, des codierten Pakets, das in der ersten Cache-Warteschlange gespeichert ist, an den Zielknoten.

3. Verfahren nach Anspruch 1 oder 2, wobei die Datenströme ferner einen zweiten Datenstrom umfassen, dessen codierte Form kein "Fountain-Code" ist, und das Verfahren ferner umfasst:
Empfangen, durch den ersten Zwischenknoten, eines Pakets des zweiten Datenstroms; Speichern, durch den ersten Zwischenknoten, des Pakets des zweiten Datenstroms in einer zweiten Cache-Warteschlange, wobei die zweite Cache-Warteschlange eine Cache-Warteschlange ist, die dem zweiten Datenstrom durch den ersten Zwischenknoten zugewiesen wird; und
Senden, durch den ersten Zwischenknoten, des Pakets, das zum zweiten Datenstrom gehört und in der zweiten Cache-Warteschlange zwischengespeichert ist, an den Zielknoten.

4. Netzwerkvorrichtung (200), die als ein erster Zwischenknoten fungiert, wobei die Netzwerkvorrichtung dafür ausgelegt ist, Datenströme zwischen einem Quellknoten und einem Zielknoten zu übertragen; die Datenströme einen ersten Datenstrom umfassen, dessen codierte Form ein "Fountain-Code" ist; und die Netzwerkvorrichtung umfasst:
ein Empfangsmodul (210), das dafür ausgelegt ist, ein codiertes Paket zu empfangen, das vom Quellknoten oder einem Zwischenknoten gesendet wird, wobei das codierte Paket ein Paket ist, das durch Codieren eines ursprünglichen Pakets des ersten Datenstroms mit einer "Fountain-Code"-Technologie erhalten wird; und der Zwischenknoten sich zwischen dem Quellknoten und dem Zielknoten befindet und dazu verwendet wird, Daten zwischen dem Quellknoten und dem Zielknoten weiterzuleiten; und
ein Verarbeitungsmodul (220), das für Folgendes ausgelegt ist: Verwerfen des vom Empfangsmodul empfangenen codierten Pakets, wenn die Nutzung einer ersten Cache-Warteschlange einen Schwellenwert überschreitet, wobei die erste Cache-Warteschlange eine Cache-Warteschlange im ersten Zwischenknoten ist und die erste Cache-Warteschlange dem ersten Datenstrom zugewiesen ist, und der Schwellenwert eine maximal zulässige Nutzung der ersten Cache-Warteschlange angibt, **dadurch gekennzeichnet, dass**:
das Empfangsmodul ferner für Folgendes ausgelegt ist: Empfangen einer Anweisungsnachricht, wobei die Anweisungsnachricht vom Zielknoten gesendet wird, wenn der Zielknoten mittels Decodierung auf der Grundlage empfangener codierter Pakete alle ursprünglichen Pakete des ersten Datenstroms erhält, die Anweisungsnachricht dazu verwendet wird, den Quellknoten anzuweisen, das Senden des ersten Datenstroms zu stoppen, und eine Größe der Anweisungsnachricht 1 Bit beträgt; und
die Netzwerkvorrichtung ferner ein zweites Sendemodul umfasst, das dafür ausgelegt ist, die vom Empfangsmodul empfangene Anweisungsnachricht an den Quellknoten zu senden,
wobei die Anweisungsnachricht ferner zum Anweisen verwendet wird, den ersten Datenstrom zu verwerfen; und das Verarbeitungsmodul ferner dafür ausgelegt ist, entsprechend der Anweisungsnachricht ein codiertes Paket zu verwerfen, das zum ersten Datenstrom gehört und in der ersten Cache-Warteschlange gespeichert ist.

5. Netzwerkvorrichtung nach Anspruch 4, wobei das Verarbeitungsmodul ferner für Folgendes ausgelegt ist: wenn die Nutzung der ersten Cache-Warteschlange den Schwellenwert nicht überschreitet, Speichern des vom Empfangsmodul empfangenen codierten Pakets in der ersten Cache-Warteschlange; und
die Netzwerkvorrichtung ferner ein erstes Sendemodul umfasst, das dafür ausgelegt ist, das in der ersten Cache-Warteschlange gespeicherte codierte Paket an den Zielknoten zu senden.

6. Netzwerkvorrichtung nach Anspruch 4 oder 5, wobei die Datenströme ferner einen zweiten Datenstrom umfassen, dessen codierte Form kein "Fountain-Code" ist, und das Empfangsmodul ferner dafür ausgelegt ist, ein Paket des zweiten Datenstroms zu empfangen;
das Verarbeitungsmodul ferner dafür ausgelegt ist, das Paket, das zum zweiten Datenstrom gehört und das vom Empfangsmodul empfangen wird, in einer zweiten Cache-Warteschlange zu speichern, wobei die zweite Cache-Warteschlange eine Cache-Warteschlange ist, die dem zweiten Datenstrom von der Netzwerkvorrichtung zugewiesen wird; und
die Netzwerkvorrichtung ferner ein drittes Sendemodul umfasst, das dafür ausgelegt ist, das Paket, das zum zweiten Datenstrom gehört und in der zweiten Cache-Warteschlange gespeichert ist, an den Zielknoten zu senden.

7. Nicht-flüchtiges computerlesbares Medium, das Computeranweisungen zum Übertragen von Datenströmen speichert, die bei ihrer Ausführung durch einen oder mehrere Prozessoren den einen oder die mehreren Prozessoren veranlassen, das Verfahren nach den Ansprüchen 1 bis 3 durchzuführen.

## Revendications

1. Procédé (100) pour transmettre des flux de données, procédé dans lequel les flux de données sont transmis entre un nœud source et un nœud de destination en utilisant au moins un nœud intermédiaire ; ces flux de données comprenant un premier flux de données dont la forme codée est un code fontaine ; et ce procédé comprenant :
la réception (S130), par un premier nœud intermédiaire, d'un paquet codé envoyé par le nœud source ou par un deuxième nœud intermédiaire, ce paquet codé étant un paquet obtenu en codant un paquet d'origine du premier flux de données avec une technologie de code fontaine ; et
l'abandon (S150), par le premier nœud intermédiaire, du paquet codé lorsque l'utilisation d'une première file d'attente en mémoire cache dépasse un seuil, cette première file d'attente en mémoire cache étant dans le premier nœud intermédiaire et cette première file d'attente en mémoire cache étant une file d'attente en mémoire cache attribuée au premier flux de données, et le seuil indiquant l'utilisation maximum permise de la première file d'attente en mémoire cache, **caractérisé en ce que** ce procédé comprend en outre :
la réception, par le premier nœud intermédiaire, d'un message d'instruction, ce message d'instruction étant envoyé par le nœud de destination lorsque le nœud de destination obtient, au moyen d'un décodage basé sur des paquets codés reçus, tous les paquets d'origine du premier flux de données, ce message d'instruction étant utilisé pour demander au nœud source d'arrêter d'envoyer le premier flux de données, et une taille de ce message d'instruction étant 1 bit ;
l'envoi, par le premier nœud intermédiaire, du message d'instruction au nœud source, le message d'instruction étant utilisé en outre pour demander d'abandonner le premier flux de données ; et
l'abandon, par le premier nœud intermédiaire conformément au message d'instruction, d'un paquet codé qui appartient au premier flux de données et qui est stocké dans la première file d'attente en mémoire cache .

2. Procédé selon la revendication 1, ce procédé comprenant en outre :
lorsque l'utilisation de la première file d'attente en mémoire cache ne dépasse pas le seuil, le stockage (S160), par le premier nœud intermédiaire, du paquet codé dans la première file d'attente en mémoire cache ; et
l'envoi (S170), par le premier nœud intermédiaire, du paquet codé stocké dans la première file d'attente en mémoire cache au nœud de destination.

3. Procédé selon la revendication 1 ou 2, dans lequel les flux de données comprennent en outre un deuxième flux de données dont la forme codée n'est pas un code fontaine, et ce procédé comprenant en outre :
la réception, par le premier nœud intermédiaire, d'un paquet du deuxième flux de données ;
le stockage, par le premier nœud intermédiaire, du paquet du deuxième flux de données dans une deuxième file d'attente en mémoire cache, cette deuxième file d'attente en mémoire cache étant une file d'attente en mémoire cache attribuée au deuxième flux de données par le premier nœud intermédiaire ; et
l'envoi, par le premier nœud intermédiaire, du paquet qui appartient au deuxième flux de données et qui est mis en mémoire cache dans la deuxième file d'attente en mémoire cache au nœud de destination.

4. Dispositif de réseau (200), fonctionnant comme un premier nœud intermédiaire,
ce dispositif de réseau étant configuré de façon à transmettre des flux de données entre un nœud source et un nœud de destination ; ces flux de données comprenant un premier flux de données dont la forme codée est un code fontaine ; et ce dispositif de réseau comprenant :
un module de réception (210), configuré de façon à recevoir un paquet codé envoyé par le nœud source ou par un nœud intermédiaire, ce paquet codé étant un paquet obtenu en codant un paquet d'origine du premier flux de données avec une technologie de code fontaine ; et le nœud intermédiaire étant situé entre le nœud source et le nœud de destination, et étant utilisé pour réacheminer des données entre le nœud source et le nœud de destination ; et
un module de traitement (220), configuré de façon à : abandonner le paquet codé reçu par le module de réception lorsque l'utilisation d'une première file d'attente en mémoire cache dépasse un seuil, cette première file d'attente en mémoire cache étant une file d'attente en mémoire cache dans le premier nœud intermédiaire et cette première file d'attente en mémoire cache étant attribuée au premier flux de données, et le seuil indiquant l'utilisation maximum permise de la première file d'attente en mémoire cache, **caractérisé en ce que** :
le module de réception est configuré en outre de façon à : recevoir un message d'instruction, ce message d'instruction étant envoyé par le nœud de destination lorsque le nœud de destination obtient, au moyen d'un décodage basé sur des paquets codés reçus, tous les paquets d'origine du premier flux de données, ce message d'instruction étant utilisé pour demander au nœud source d'arrêter d'envoyer le premier flux de données, et une taille de ce message d'instruction étant 1 bit ; et
le dispositif de réseau comprenant en outre un deuxième module d'envoi, configuré de façon à envoyer le message d'instruction reçu par le module de réception au nœud source,
le message d'instruction étant utilisé en outre de façon à demander d'abandonner le premier flux de données ; et le module de traitement étant configuré en outre de façon à abandonner, conformément au message d'instruction, un paquet codé qui appartient au premier flux de données et qui est stocké dans la première file d'attente en mémoire cache.

5. Dispositif de réseau selon la revendication 4, dans lequel le module de traitement est configuré en outre de façon à : lorsque l'utilisation de la première file d'attente en mémoire cache ne dépasse pas le seuil, stocker le paquet codé reçu par le module de réception dans la première file d'attente en mémoire cache ; et
ce dispositif de réseau comprenant en outre un premier module d'envoi, configuré de façon à envoyer le paquet codé stocké dans la première file d'attente en mémoire cache au nœud de destination.

6. Dispositif de réseau selon la revendication 4 ou 5, dans lequel les flux de données comprennent en outre un deuxième flux de données dont la forme codée n'est pas un code fontaine, et le module de réception est configuré en outre de façon à recevoir un paquet de ce deuxième flux de données ;
le module de traitement est configuré en outre de façon à stocker le paquet qui appartient au deuxième flux de données et qui est reçu par le module de réception dans une deuxième file d'attente en mémoire cache, cette deuxième file d'attente en mémoire cache étant une file d'attente en mémoire cache attribuée au deuxième flux de données par le dispositif de réseau ; et
le dispositif de réseau comprend en outre un troisième module d'envoi, configuré de façon à envoyer le paquet qui appartient au deuxième flux de données et qui est stocké dans la deuxième file d'attente en mémoire cache au nœud de destination.

7. Support non transitoire lisible par ordinateur stockant des instructions informatiques pour transmettre des flux de données, qui, lorsqu'elles sont exécutées par un ou plusieurs processeurs, font exécuter à ce ou ces processeurs le procédé selon les revendications 1 à 3.
